# EUROPÄISCHE PATENTANMELDUNG

(11) **EP 2 039 241 A2**
(43) Veröffentlichungstag der Anmeldung: **25.03.2009**
(21) Anmeldenummer: 08011885.4
(22) Anmeldetag: 02.07.2008
(51) Int. Cl.: A01K 1/015

(54) **Beheizbares Bodenmodul für Viehställe**

(30) Priorität: 06.07.2007 DE 202007009508 U
(71) Anmelder: Tolges Kunststoffverarbeitung Gesellschaft mit beschränkter Haftung & Co. Kommanditgesellschaft, 34414 Warbung (DE)
(72) Erfinder: Grundkötter, Wilhelm, 34414 Warburg (DE)
(74) Vertreter: Walther, Walther & Hinz GbR

(57) **Zusammenfassung**

Gegenstand der vorliegenden Erfindung ist ein beheizbares Bodenmodul (1) für Viehställe, insbesondere Schweineställe, wobei das Bodenmodul (1) stirnseitig an mindestens zwei gegenüberliegenden Seitenkanten Mittel (11) zum Einhängen in Träger aufweist, wobei das Bodenmodul (1) ein kastenartiges Bodenelement (3) sowie ein Deckelelement (2) aufweist, wobei auf dem Bodenelement (3) beabstandet zum Bodenelement (3) ein Zwischenboden (4) vorgesehen ist, wobei der Zwischenboden (4) Lagerstützen (7) für eine Heizleitung (6) aufweist, wobei in dem Raum (5) zwischen Zwischenboden (4) und Deckelelement (2) ein wärmeleitfähiges Wärmefluid, z. B. Wasser, vorgesehen ist.

## Beschreibung

Die Erfindung betrifft ein beheizbares Bodenmodul für Viehställe, insbesondere Schweineställe, wobei das Bodenmodul stirnseitig an mindestens zwei gegenüberliegenden Seitenkanten Mittel zum Einhängen in Träger aufweist.

Beheizbare Bodenmodule sind aus dem Stand der Technik hinreichend bekannt. In diesem Zusammenhang ist insbesondere die EP 1 488 692 B1 zu nennen, die bereits ein beheizbares Bodenmodul beschreibt. Beheizbare Bodenmodule dienen insbesondere als Boden in Schweineställen bei der Ferkelzucht. Diese beheizbaren Bodenmodule sind in einer Güllegrube verlaufenden Trägern eingehängt, und zwar in der Art, dass zwischen den einzelnen Bodenmodulen Ritzen oder Spalten entstehen, durch die die Gülle in die darunter befindliche Grube abfließen kann. Beheizbar sind die Bodenmodule insbesondere deshalb, als sich herausgestellt hat, dass mit beheizbaren Bodenmodulen die Aufzucht der Ferkel schneller vonstatten geht, und zwar insofern, als diese schneller an Gewicht zunehmen. Einsetzbar ist ein solches Bodenmodul allerdings nicht nur in der Aufzucht von Ferkeln, sondern, wie bereits ausgeführt, generell in Viehställen und hier insbesondere in Schweineställen.

Aus der bereits zuvor herangezogenen EP 1 488 692 B1 ist ein Bodenmodul bekannt, dass aus zwei Elementen besteht, nämlich einem Bodenelement und einem Deckelelement, wobei das Bodenelement eine mäanderförmige verlaufende Rinne aufweist, die durch das Bodenelement nach oben abgeschlossen wird, wobei in dieser Rinne eine beheizbare Flüssigkeit, insbesondere Wasser, geführt wird. Nachteilig an einem solchen Bodenelement ist, dass die beiden Teile, die das Bodenmodul bilden, passgenau und dicht miteinander verbunden sein müssen, um zu verhindern, dass das durch die Rinne geführte Wasser austreten kann. Darüber hinaus kann der Warmwasseranschluss nicht unmittelbar an ein Heizsystem erfolgen, vielmehr muss ein Wärmetauscher zwischengeschaltet sein, da es bei Undichtigkeiten mit Eintritt von Gülle in den Heizkreislauf dann naturgemäß zu Verschmutzungen in der Heizungsanlage kommt.

Der Erfindung liegt daher die Aufgabe zugrunde, ein Bodenmodul der eingangs genannten Art zu schaffen, welches beheizbar ist, und welches unmittelbar an den Heizkreislauf eines Heizungssystems angeschlossen werden kann, und welches sich weiterhin durch eine geringe Wärmeabstrahlung in Richtung auf die Güllegrube auszeichnet, d. h., das einen relativ geringen Wärmebedarf hat.

Die Aufgabe wird erfindungsgemäß dadurch gelöst, dass das Bodenmodul ein kastenartiges Bodenelement sowie ein Deckelelement aufweist, wobei auf dem Bodenelement beabstandet zum Bodenelement ein Zwischenboden vorgesehen ist, wobei der Zwischenboden eine Heizleitung aufweist, wobei in dem Raum zwischen Zwischenboden und Deckelelement ein wärmeleitfähiges Fluid, z. B. Wasser, vorgesehen ist. Hieraus ergibt sich Folgendes:
Dadurch, dass das Zwischenmodul beabstandet zum Bodenelement angeordnet ist, wird eine Isolierschicht gebildet, die dafür sorgt, dass das auf dem Zwischenboden aufstehende wärmeleitfähige Fluid, z. B. Wasser, seine Wärme nicht unmittelbar über das Bodenelement an die Umgebung abgeben kann. Vielmehr befindet sich zwischen dem Zwischenboden einerseits und dem Bodenelement andererseits eine Luftschicht, die isolierend wirkt. Darüber hinaus ist in dem Raum zwischen Zwischenboden und Deckelelement eine Heizleitung vorgesehen. Diese Heizleitung stellt sich als ein in sich abgeschlossenes System dar, und kann insofern unmittelbar an ein Heizungssystem angeschlossen sein. Diese Heizleitung umgibt ein wärmeleitfähiges Fluid, z. B. Wasser, das durch die Heizleitung erwärmt wird. Die Heizleitung besteht vorteilhaft aus einem diffusionsdichten Rohr, z. B. aus Kupfer, Edelstahl etc., so dass keine Luft in das Heizsystem gelangen kann.

Weitere vorteilhafte Merkmale zu der Erfindung ergeben sich aus den Unteransprüchen.

So ist insbesondere vorgesehen, dass das Bodenelement Stützglieder für den Zwischenboden aufweist. Hierdurch wird erreicht, dass die Luftschicht im Wesentlichen über die gesamte Fläche gleich dick ist.

Des Weiteren ist das Deckelelement auf dem Zwischenboden abgestützt gelagert. Hierdurch wird erreicht, dass bei Belastung das Deckelelement sich nicht durchdrückt, sondern vielmehr aufgrund der abgestützten Lagerung auf dem Zwischenboden gleichmäßig trägt, wobei insbesondere dann, wenn das Bodenelement Stützglieder für den Zwischenboden aufweist, eine in sich kompakte und überaus stabile Konstruktion für ein Bodenmodul bereitgestellt wird.

Nach einem weiteren Merkmal der Erfindung ist vorgesehen, dass das Deckelelement zur Bildung einer Spitze flach pyramidenförmig ausgebildet ist. Eine solche Ausgestaltung hat zum einen den Vorteil, dass die Gülle leicht durch die das Bodenmodul umgebenden Schlitze in die darunter befindliche Grube abfließen kann und hat darüber hinaus zum anderen den Vorteil, dass ein Befüllen des Hohlraumes zwischen dem Zwischenboden und dem Deckelelement durch die in der Spitze vorgesehene, durch einen Stopfen verschließbare Öffnung, mit einem wärmeleitfähigen Fluid, also z. B. Wasser, im Wesentlichen ohne Luftpolster möglich ist.

Wie bereits an anderer Stelle erläutert, erfolgt die Beheizung des wärmeleitfähigen Fluids durch eine Heizleitung, beispielsweise einer Heizleitung, die mit Wasser gefüllt ist, die unmittelbar an ein Heizungssystem angeschlossen sein kann. Das Bodenelement weist insofern zwei Öffnungen für diese Heizleitung auf, und zwar eine Öffnung für die Zufuhr und eine Öffnung für die Abfuhr des Heizmediums in die Heizleitung.

Nach einem weiteren vorteilhaften Merkmal der Erfindung sind der Zwischenboden und das Deckelelement mit dem Bodenelement, wobei diese Teile insbesondere aus Kunststoff und hier insbesondere aus Polypropylen gefertigt sind, stoffschlüssig, z. B. durch Schweißen, verbunden. Durch eine solche stoffschlüssige Verbindung werden Undichtigkeiten weitgehend vermieden.

Wie bereits zu eingangs erläutert, werden die Bodenmodule in Träger eingehängt. Solche Träger verlaufen parallel zueinander in etwa im Abstand der Breite eines Bodenmoduls und sind im Randbereich der Güllegrube gelagert. Die einzelnen Bodenmodule sind, um ein Verschieben relativ zueinander zu vermeiden, ebenfalls untereinander verbunden, und zwar ebenfalls jeweils an entgegengesetzten Stirnseiten, dadurch, dass an den Stirnseiten jeweils sich horizontal erstreckende Haken vorgesehen sind, die jeweils entgegengesetzt ausgerichtet sind, und durch die die einzelnen Bodenmodule miteinander formschlüssig in Verbindung stehen.

Anhand der Zeichnungen wird die Erfindung nachstehend beispielhaft näher erläutert.
- Fig. 1: zeigt das Bodenmodul in einer Draufsicht;
- Fig. 2: zeigt eine erste Seitenansicht;

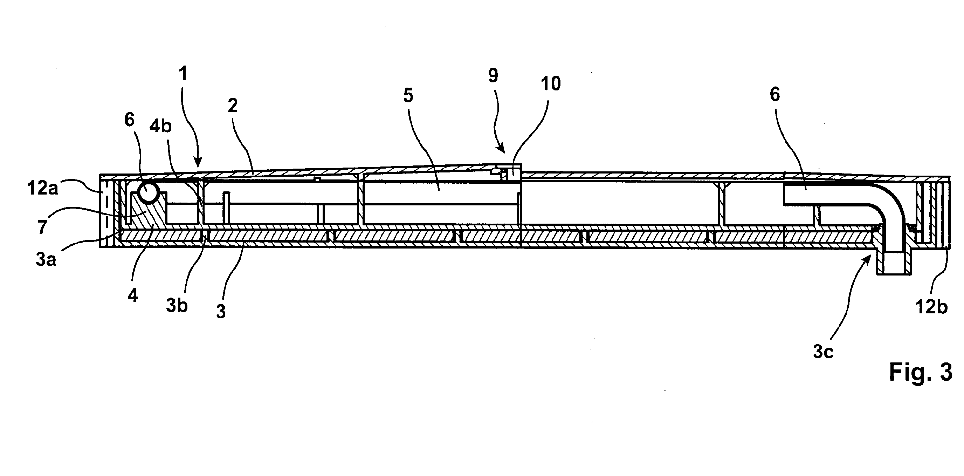

- Fig. 3: zeigt eine zweite Seitenansicht.

Das insgesamt mit 1 bezeichnete Bodenmodul besitzt das Deckelelement 2, das Bodenelement 3 sowie den mit 4 bezeichneten Zwischenboden. Das Bodenelement 3 ist erkennbar kastenförmig ausgebildet und weist insofern Seitenwände 3a auf. Die Seitenwände sind nach unten verlängert (Pfeil 3a, b) und zwar in einer Höhe, die der der pyramidenförmigen Ausgestaltung des Deckelelements 2 entspricht, so dass sich die Bodenmodule für den Transport leicht stapeln lassen. Das Bodenelement 3 besitzt darüber hinaus Stützglieder 3b, auf denen sich der mit 4 bezeichnete Zwischenboden abstützt. Der Zwischenboden 4 wiederum besitzt Abstandshalter 4b, auf denen das Deckelelement 2 aufsitzt. Sowohl der Zwischenboden 4 als auch das Bodenelement 3 sind mit dem Deckel 2 stoffschlüssig, insbesondere durch Schweißen, verbunden. Insofern ergibt sich in Bezug auf den Raum 5, dass dieser gegenüber der Umgebung hermetisch abgedichtet ist. Dies ist insofern wichtig, als in diesem Raum 5 ein wärmeleitfähiges Fluid vorgesehen ist, das durch die Heizleitung 6, in der vorzugsweise erwärmtes Wasser geführt wird, erwärmt wird. Insofern entsteht über die gesamte Oberfläche eines solches Bodenmoduls eine gleichmäßige Wärme. Diese Heizleitung 6 ist mit einem Heizungssystem (nicht dargestellt) unmittelbar verbunden. Die Heizleitung 6 lagert auf sogenannten Lagerstützen 7, die eine Ausnehmung entsprechend der Form der Heizleitung aufweisen.

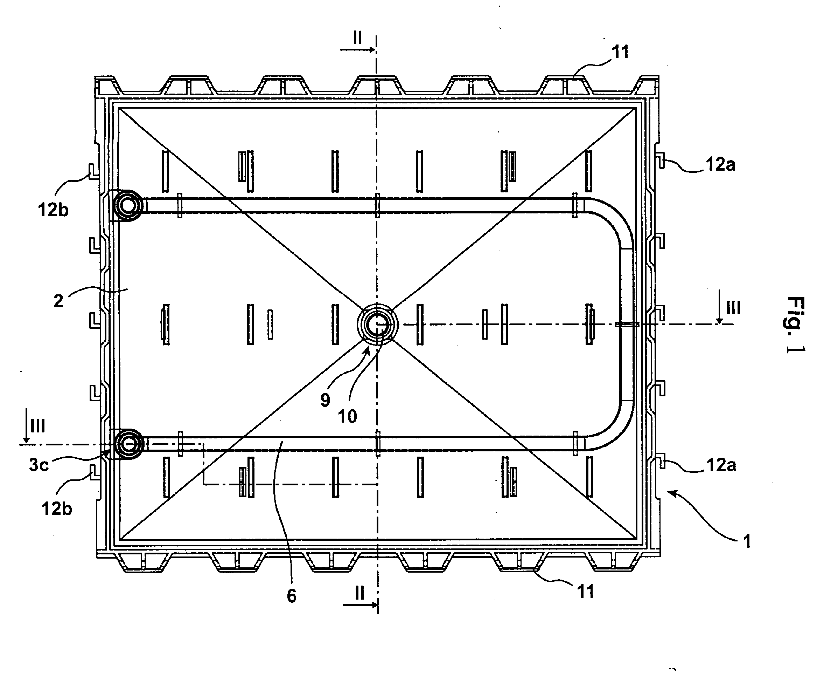

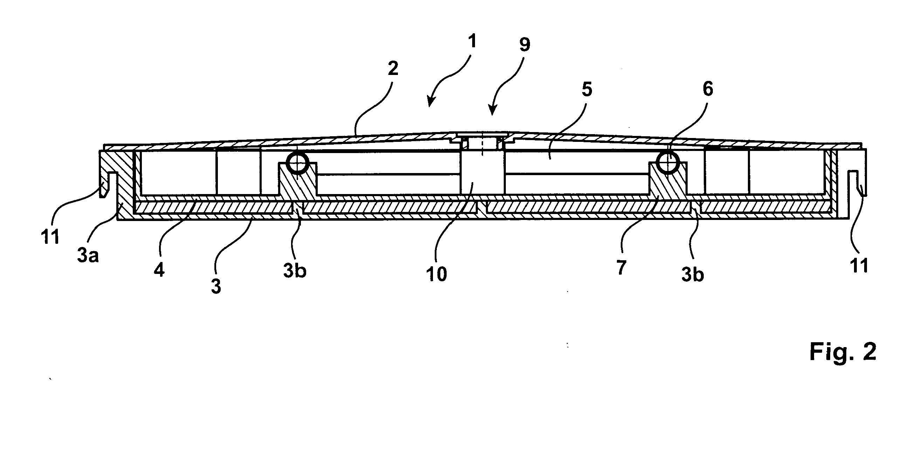

Das Deckelelement 2 ist flach pyramidenförmig ausgebildet, wie sich dies insbesondere in Anschauung der Figur 1 aber auch der Figur 2 ergibt, und besitzt im Bereich seiner Spitze 9 eine Öffnung 10, die durch einen Stopfen (nicht dargestellt) verschließbar ist. Durch diese Öffnung wird das wärmeleitfähige Fluid, also insbesondere Wasser, für den Raum 5 eingeführt. Dadurch, dass die Öffnung 9 an der höchsten Stelle im Deckelelement 2 angeordnet ist, kann sichergestellt werden, dass in dem Raum 5 im Wesentlichen keine Luft mehr nach Befüllung mit Wasser vorhanden ist. Der Verlauf der Heizleitung 6 in dem Raum 5 zwischen dem Zwischenboden und dem Deckelelement ist U-förmig gehalten, und zwar derart, dass die Schenkel sowohl zu den Seitenflächen als auch zur Mittellängsachse einen in etwa gleichen Abstand aufweisen. Auch dies bewirkt eine gleichmäßige und schnelle Erwärmung des die Heizleitung umgebenden Fluids. Für die Heizleitung 6 weist das Bodenelement 3 Öffnungen 3c auf, wobei ein Flansch vorgesehen sein kann, um die Heizleitung 6 mit dem Heizungssystem zu verbinden.

Wie bereits an anderer Stelle ausgeführt, lagern die einzelnen Bodenmodule auf parallel zueinander verlaufenden Trägern. Hierzu besitzen die Bodenmodule seitlich angeordnete, im Einbauzustand nach unten ausgerichtete Haken 11. An den einander gegenüberliegenden weiteren Stirnseiten sind horizontal ausgerichtete Haken 12a, 12b vorgesehen, die jeweils einander entgegengerichtet ausgebildet sind, so dass zwei Bodenmodule durch diese Haken 12a, 12b miteinander formschlüssig durch Einhaken verbunden werden können.

## Patentansprüche

1. Beheizbares Bodenmodul (1) für Viehställe, insbesondere Schweineställe, wobei das Bodenmodul (1) stirnseitig an mindestens zwei gegenüberliegenden Seitenkanten Mittel (11) zum Einhängen in Träger aufweist, wobei das Bodenmodul (1) ein kastenartiges Bodenelement (3) sowie ein Deckelelement (2) aufweist, wobei auf dem Bodenelement (3) beabstandet zum Bodenelement (3) ein Zwischenboden (4) vorgesehen ist, wobei der Zwischenboden (4) Lagerstützen (7) für eine Heizleitung (6) aufweist, wobei in dem Raum (5) zwischen Zwischenboden (4) und Deckelelement (2) ein wärmeleitfähiges Wärmefluid, z. B. Wasser, vorgesehen ist.

2. Beheizbares Bodenmodul nach Anspruch 1,
**dadurch gekennzeichnet,**
**dass** das Bodenelement (3) Stützglieder (3b) für den Zwischenboden (4) aufweist.

3. Beheizbares Bodenmodul nach einem der voranstehenden Ansprüche,
**dadurch gekennzeichnet,**
**dass** das Deckelelement (2) auf dem Zwischenboden (4) abgestützt gelagert ist.

4. Beheizbares Bodenmodul nach einem der voranstehenden Ansprüche,
**dadurch gekennzeichnet,**
**dass** das Deckelelement (2) zur Bildung einer Spitze (9) flach pyramidenförmig ausgebildet ist.

5. Beheizbares Bodenmodul nach Anspruch 4,
**dadurch gekennzeichnet,**
**dass** in der Spitze (9) eine durch einen Stopfen verschließbare Öffnung (10) vorgesehen ist.

6. Beheizbares Bodenmodul nach einem der voranstehenden Ansprüche,
**dadurch gekennzeichnet,**
**dass** das Bodenelement (3) zwei Öffnungen (3c) für die Heizleitung (6) aufweist.

7. Beheizbares Bodenmodul nach einem der voranstehenden Ansprüche,
**dadurch gekennzeichnet,**
**dass** der Zwischenboden (4) und das Deckelelement (2) mit dem Bodenelement (3) stoffschlüssig, z. B. durch Schweißen, verbunden sind.

8. Beheizbares Bodenmodul nach einem der voranstehenden Ansprüche,
**dadurch gekennzeichnet,**
**dass** der Zwischenboden (4), das Deckelelement (2) und das Bodenelement (3) aus Kunststoff, insbesondere aus Polypropylen, bestehen.

9. Beheizbares Bodenmodul nach einem der voranstehenden Ansprüche,
**dadurch gekennzeichnet,**
**dass** an zwei gegenüberliegenden Seitenkanten, jeweils entgegengesetzt ausgerichtete, sich horizontal erstreckende Haken (12a, 12b) vorgesehen sind, um die Bodenmodule (1) miteinander zu verbinden.

10. Beheizbares Bodenmodul nach Anspruch 1,
**dadurch gekennzeichnet,**
**dass** die Heizleitung diffusionsdicht ist, also z. B. aus Edelstahl oder Kupfer besteht.
